# EUROPÄISCHE PATENTSCHRIFT

(11) **EP 2 655 873 B1**
(45) Veröffentlichungstag und Bekanntmachung des Hinweises auf die Patenterteilung: **20.04.2016**
(21) Anmeldenummer: 11797019.4
(22) Anmeldetag: 20.12.2011
(51) Int. Cl.: F03D 1/06, B29D 99/00, C08G 18/32, C08G 18/36, C08G 18/48, C08G 18/66, C08G 18/76, C09J 175/06, C09J 175/08, C09K 3/10, C08G 18/42

(54) **KLEBSTOFF FÜR DAS VERFÜLLEN VON FUGEN UND SPALTEN IN ROTORBLÄTTERN FÜR WINDKRAFTANLAGEN**
ADHESIVE AS GAP AND JOINT FILLER IN WIND TURBINE ROTOR BLADES
ADHÉSIF DESTINÉ AU REMPLISSAGE D'ASSEMBLAGES ET DE FENTES DANS DES LAMES DE ROTOR POUR ÉOLIENNES

(30) Priorität: 24.12.2010 EP 10196963
(43) Veröffentlichungstag der Anmeldung: 30.10.2013
(73) Patentinhaber: Sika Technology AG, 6340 Baar (CH)
(72) Erfinder: PIND, Martin, Suzhou Industrial Park Suzhou 215121 (CN); OLSEN, Bodil, DK-3320 Skaevinge (DK)
(74) Vertreter: Sika Patent Attorneys
(86) Internationale Anmeldenummer: PCT/EP2011/073411
(87) Internationale Veröffentlichungsnummer: WO 2012/084949

(56) Entgegenhaltungen:
- WO-A1-2009/080740
- DE-A1- 4 114 022
- DE-A1-102007 021 794
- US-A1- 2006 182 957
- US-A1- 2009 253 819
- US-A1- 2010 190 016
- Anonymous: "functional products SOVERMOL (r) 805", COGNIS, 9. März 2009 (2009-03-09), Seiten 1-4, XP002640374, Gefunden im Internet: URL:http://www.products.cognis.com/cognis/ prodleafR2.nsf/($ProductsbyDocID_PL-Header )/REF33251C6E41933898C1256FE30050DCF5/$fil e/SOVERMOL_r_805_D.pdf [gefunden am 2011-06-01]

## Beschreibung

### Technisches Gebiet

Die Erfindung betrifft das Gebiet der zweikomponentigen Polyurethanklebstoffe, insbesondere der strukturellen zweikomponentigen Polyurethanklebstoffe und insbesondere das Gebiet der Verklebung und Verfüllen von Fugen und Spalten von Rotorblättern für Windkraftanlagen.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen auch bei nicht erhöhter Umgebungstemperatur ("Kalthärtung") schnell aushärten und deshalb bereits nach kurzer Zeit schnell höhere Kräfte aufnehmen können. Für den Einsatz als strukturelle Klebstoffe werden jedoch hohe Ansprüche in Bezug auf Festigkeiten und Klebkräfte an solche Klebstoffe gestellt, da derartige Klebstoffe Elemente von tragenden Strukturen darstellen. Hohe Festigkeiten werden üblicherweise durch hohe Vernetzungsdichte erreicht. Dies wird üblicherweise durch die Erhöhung der Konzentration an funktionellen Gruppen und den Einsatz von höherfunktionellen Polyolen oder Polyamine und höher funktionellen Polyisocyanaten erreicht.

WO 2006/084900 A2 offenbart einen zweikomponentigen Polyurethanklebstoff, welcher als struktureller Klebstoff einsetzbar ist.

Insbesondere für den Bau von Rotorblättern für Windkraftanlagen, wo vorgefertigte Flügelhalbschalen mit einer Tragwerkstruktur und zusätzlich miteinander verklebt werden müssen, weisen die bisherigen zweikomponentige Polyurethanklebstoffe jedoch das grosse Problem auf, dass sie über eine lange Offenzeit verfügen müssen, damit der Klebstoff grossflächig aufgetragen werden und der Fügevorgang zeitversetzt stattfinden kann. Das Vorhandensein von erhöhter Luftfeuchtigkeit führt vermehrt zur Nebenreaktion der Isocyanatgruppen in der Isocyanat-Komponente mit Wasser. Dabei werden zusätzliche Iscocyanat-Gruppen verbraucht, die nicht mehr zum Aufbau eines vernetzten Polyurethans zur Verfügung stehen. Darüber hinaus kann es zur Schäumung des Klebstoffs durch Kohlendioxidentwicklung kommen. In der Folge können sich bei hoher Luftfeuchtigkeit, wie sie bei üblichen saisonalen Schwankungen oder aufgrund klimatischer Besonderheiten am Verarbeitungsort zu beobachten ist, zum einen die Reaktion des Klebstoffs mit Luftfeuchtigkeit insbesondere die Offenzeit des Klebstoffs stark verkürzen sowie die mechanischen Eigenschaften des ausgehärteten Klebstoffs stark verschlechtern.

WO 2009/080740 A1 offenbart einen zweikomponentigen Polyurethanklebstoff, welcher für das Verkleben von Faserformteilen geeignet ist und sich durch die Kombination eines hochmolekularen Polyesterdiols, eines hochfunktionellen Polyols, eines hydrophoben Polyols und weiterer Hilfsstoffe auszeichnet. Diese Klebstoffe weisen jedoch hohe Steifigkeit mit Werten für den E-Modul von mehr als 2'000 MPa auf und sind insbesondere in den mechanischen Eigenschaften im Sinne einer Verbesserung der mechanischen Zähigkeit noch verbesserungsfähig.

Beim Verkleben der vorgefertigten Flügelhalbschalen mit einer Trägwerkstruktur entstehen zwangsläufig Fugen. Darüber hinaus kann es nach längerem Einsatz eines strukturell verklebten Rotorblatts im Bauteil selbst oder im Bereich der Klebefugen zur Bildung von Spannungsrissen kommen, die als Spalten an der Oberfläche sichtbar sind. Um diese Fugen und Spalten zu verfüllen muss ein Klebstoff verwendet werden, der wie oben beschrieben, über eine lange Offenzeit und hohe mechanische Festigkeit in Kombination mit einem gewissen Ausmass an Elastizität im Sinne eines zäh-elastisch modifizierten, Materials verfügt.

### Darstellung der Erfindung

Die Aufgabe der vorliegenden Erfindung ist es daher, zweikomponentige Polyurethanzusammensetzungen zur Verfügung zu stellen, welche einerseits über eine lange Offenzeit verfügen und nach Applikation auf einem Substrat und nach längerer Exposition gegenüber einem Klima mit hoher Luftfeuchtigkeit (z.B. 70% relative Luftfeuchtigkeit) auch nach 40 Minuten, insbesondere auch noch nach 60 Minuten, gefügt (verklebt) werden können und zu Polymeren mit einem gewissen Mass an Elastizität (5 - 15 % Bruchdehnung) kombiniert mit einer hohen Zugfestigkeit (>15 MPa) aushärten.

Überraschenderweise wurde nun gefunden, dass eine zweikomponentige Polyurethanzusammensetzung gemäss Anspruch 1 in der Lage ist, dieses Problem zu lösen.

Es zeigte sich, dass diese Zusammensetzungen sich aufgrund ihrer mechanischen Eigenschaften optimal für das Verfüllen von Fugen und Spalten bei strukturellen Verklebungen von grossflächigen Formteilen, insbesondere von Rotorblatt-Halbschalen beim Bau von Windkraftanlagen, eignen. Insbesondere zeigte sich, dass die erfindungsgemässen Klebstoffe ein besonders gutes Gleichgewicht zwischen Bruchdehnung und Zugfestigkeit im Sinne eines zähelastisch modifizierten Materials aufweisen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung, welche aus einer Polyolkomponente (**K1**) und einer Polyisocyanatkomponente (**K2**) besteht.

Die Polyolkomponente (**K1**) umfasst hierbei
Rizinusöl **(A0);**
mindestens ein Polyol mit 5 bis 8 Hydroxylgruppen **(A1)**;
mindestens ein Polyether- und/oder Polyesterpolyol auf Basis von Rizinusöl oder Sojabohnenöl mit einer OH-Zahl von 150 bis 200 mg KOH/g (**A2-1**)
sowie mindestens ein Polyether- und/oder Polyesterpolyol auf Basis von Rizinusöl oder Sojabohnenöl mit einer OH-Zahl von 210 bis 300 mg KOH/g (**A2-2**).

Die Polyisocyanatkomponente (**K2**) umfasst hierbei mindestens ein Polyisocyanat (**B1**).

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppen pro Molekül enthält.

Als Spalten werden im vorliegenden Dokument an der Oberfläche der strukturell verklebten Rotorblätter sichtbare Risse bezeichnet.

Die Polyolkomponente (**K1**) umfasst Rizinusöl (**A0**). Rizinusöl ist ein natürlich nachwachsender Rohstoff und wird aus dem Samen der Rizinusstaude (Ricinus communis, Wolfsmilchgewächs) gewonnen. Im Wesentlichen ist Rizinusöl ein Trigylycerid. Die Rizinolsäure weist sekundäre Hydroxylgruppen auf. Demzufolge stellt Rizinusöl ein hydrophobes Polyol dar. Das Rizinusöl kann roh oder aufgereinigt eingesetzt werden. Als besonders geeignet hat sich der Einsatz von Rizinusöl mit einem reduzierten Gehalt an freien Fettsäuren (low FFA castor oil) erwiesen. Vorzugsweise wird Rizinusöl mit einem Gehalt an freien Fettsäuren von weniger als 5 Gew.-%, insbesondere von zwischen 1 und 4 Gew.-%, verwendet.

Die Verwendung von Rizinusöl als wieder nachwachsendem Naturprodukt in technischen Produkten ist ökologisch äusserst wertvoll und deshalb sehr vorteilhaft.

Es ist vorteilhaft, wenn der Anteil von Rizinusöl (**A0**) in der Polyolkomponente (**K1**) zwischen 5 und 30 Gew.-%, insbesondere zwischen 10 und 25 Gew.-%, bevorzugt zwischen 14 und 20 Gew.-%, ist.

Die Polyolkomponente (**K1**) umfasst mindestens ein Polyol mit 5 bis 8 Hydroxylgruppen (**A1**). Derartig hochfunktionelle Polyole werden in der Klebstoffbranche normalerweise als Polyole relativ selten verwendet, da sie stark vernetzend wirken und deshalb in den meisten Systemen nach der Aushärtung zur Versprödung führen. Insbesondere geeignet sind Zuckeralkohole sowie auf Zuckeralkohol basierende Polyole, die eine entsprechende Anzahl von OH-Gruppen aufweisen, insbesondere Pentite oder Hexite oder solche auf Basis von Disacchariden. Es können auch die entsprechenden Zucker eingesetzt werden, insbesondere handelt es sich jedoch um die hydrierten Zuckeralkohole. Beispiele sind Sorbitol, Inositol, Mannitol, Adonitol, Ribitol, Xylitol, Dulcitol, Glucose, Galactose, Mannose, Allose, Altrose, Gulose, Idose, Talose, Fructose, Sorbose, Psicose, Saccharose, Lactose, Trehalose, Maltose, Cellobiose, Melibiose sowie Rutinose. Es können auch die entsprechenden Ethoxylierungs- und Propoxylierungsprodukte mit bis zu 15 Alkylenoxideinheiten eingesetzt werden.

Das Molekulargewicht solcher Polyole mit 5 bis 8 Hydroxylgruppen (**A1**) kann 120 bis 3000 g/mol, insbesondere 250 bis zu 2000 g/mol, betragen.

Es können auch Polyetherpolyole eingesetzt werden. Beispiele dafür sind Umsetzungsprodukte aus 5 bis 6 funktionellen Alkoholen, die durch Umsetzung mit Ethylenoxid oder Propylenoxid hergestellt werden können.

Eine weitere Gruppe von geeigneten Polyetherpolyolen sind die Polytetramethylenglykole, insbesondere Poly(THF)diole, die z.B. durch die saure Polymerisation von Tetrahydrofuran hergestellt werden können. Dabei liegt das Molekulargewicht dieser Polyetherpolyole im Allgemeinen zwischen 200 und 6000 g/mol, vorzugsweise im Bereich von 400 bis 3000 g/mol.

Die Polyole mit 5 bis 8 Hydroxylgruppen (**A1**) weisen aufgrund der hohen Anzahl der reaktiven OH-Gruppen eine höhere Polarität auf. Sie sind deshalb auch zumindest teilweise mit Wasser mischbar.

Das Polyol mit 5 bis 8 Hydroxylgruppen (**A1**) basiert vorzugsweise auf Sorbitol. Besonders bevorzugt weist das Polyol mit 5 bis 8 Hydroxylgruppen (**A1**) lediglich sekundäre Hydroxylgruppen auf.

Es ist vorteilhaft, wenn der Anteil vom Polyol mit 5 bis 8 Hydroxylgruppen (**A1**) in der Polyolkomponente (**K1**) zwischen 5 und 30 Gew.-%, insbesondere zwischen 0.5 und 20 Gew.-%, bevorzugt 1 - 10 Gew.-%, ist.

Die Polyolkomponente (**K1**) umfasst mindestens ein Polyether- und/oder Polyesterpolyol auf Basis von Rizinusöl oder Sojabohnenöl mit einer OH-Zahl von 150 bis 200 mg KOH/g (**A2-1**). Bevorzugt ist eine OH-Zahl von 155 bis 190 mg KOH/g. Weiterhin weist es vorzugsweise ein OH-Equivalentgewicht von 300 bis 400 g/eq auf.

Als solche Polyether- und/oder Polyesterpolyole **(A2-1)** sind vorzugsweise Umsetzungsprodukte von Rizinusöl mit Ketonharzen, insbesondere solche, wie sie beispielsweise von Bayer unter der Bezeichnung Desmophen® 1150 und von Cognis unter der Bezeichung Sovermol® 805 vertrieben werden.

Die Polyolkomponente **(K1)** umfasst mindestens ein Polyether- und/oder Polyesterpolyol auf Basis von Rizinusöl oder Sojabohnenöl mit einer OH-Zahl von 210 bis 300 mg KOH/g **(A2-2).** Bevorzugt ist eine OH-Zahl von 215 bis 270 mg KOH/g. Weiterhin weist es vorzugsweise eine OH-Funktionalität zwischen 2.5 und 3, insbesondere zwischen 2.6 und 2.9, auf.

Als solche Polyether- und/oder Polyesterpolyole **(A2-2)** sind Umset-zungsprodukte von Rizinusöl mit Ketonharzen bevorzugt.

Es ist hierbei wichtig zu realisieren, dass die Anwesenheit sowohl von Polyol (**A2-1**) als auch **(A2-2)** notwendig ist, um die vorteilhaften Eigenschaften zu erreichen. Vorteilhaft ist das Gewichtsverhältnis von Polyol **(A2-1)** zu Polyol **(A2-2)** zwischen 8 und 1, insbesondere zwischen 5 und 1.5, bevorzugt zwischen 2 und 3.

Weiterhin ist es bevorzugt, wenn die Polyolkomponente **(K1)** weiterhin mindestens ein Polyamin **(PA)** in einer Menge von 0.5 bis 5 Gew.-%, bevorzugt von 1.5 -bis 2.5 Gew.-%, enthält.

Geeignete Polyamine **(PA)** sind übliche in der Polyurethanchemie verwendete Polyamine, insbesondere Diamine. Besonders geeignet sind jedoch eher hydrophobe Polyamine, insbesondere aromatische Polyamine. Besonders bevorzugte Polyamine (**PA**) sind aromatische Diamine, welche die Formel (II) aufweisen: 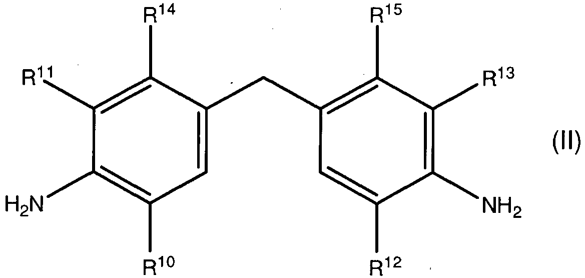 Hierbei stehen R¹⁰, R¹¹, R¹² und R¹³ je für H oder eine lineare oder verzweigte C₁- bis C₄- Alkylgruppe, mit der Massgabe, dass R¹¹ und R¹³ nicht gleichzeitig für H stehen. Weiterhin stehen R¹⁴ und R¹⁵ je für H oder ein Chloratom.

Insbesondere bevorzugt sind 4,4'-Methylenebis-(3-chloro, 2,6-diethyl)-anilin, 4,4'-Methylenebis(3-chloro-2,6-diethylanilin), 4,4'-Methylenebis(2,6-diethylanilin), 4,4'-Methylenebis(2,6-diisopropylanilin) und 4,4'-Methylenebis(2-isopropyl-6-methylanilin).

Derartige aromatische Polyamine sind gegenüber anderen aromatischen Polyaminen bevorzugt, da es sich hierbei um toxikologisch vorteilhafte aromatische Polyamine handelt.

Besonders bevorzugt ist das Polyamine (**PA**) 4,4'-Methylenebis(2,6-diethylanilin).

Weiterhin kann die Polyolkomponente **(K1)** noch andere Bestandteile umfassen. Vorteilhaft werden Aushärtungskatalysatoren eingesetzt. Derartige Katalysatoren sind dem Fachmann für die Reaktion von Polyisocyanaten mit Polyolen, gegebenenfalls auch für die Reaktion mit Polyaminen oder Wasser, bekannt. Als Beispiele für derartige Katalysatoren seien Zinn-, Zink- und Wismut-organische Metallkatalysatoren, z.B. Dibutylzinndilaurat, oder tertiäre Amine, z.B. 1,4-Diazobicyclo[2.2.2]octan (DABCO), erwähnt.

Durch die Auswahl und Konzentration von geeigneten Polyaminen **(PA)** sowie Katalysatoren kann die Topfzeit und das Härtungsverhalten sowie die Viskosität der Mischung der Komponenten **(K1** und **K2),** bzw. die Standfestigkeit des applizierten Klebstoffs, vorteilhaft beeinflusst werden.

Besonders bevorzugt sind zweikomponentige Polyurethanzusammensetzungen, welche eine die Polyolkomponente (**K1**) aufweisen, welche enthält:
10 - 25 Gew.-% Rizinusöl (**A0**);
1 - 10 Gew.-% Polyol mit 5 bis 8 Hydroxylgruppen (**A1**);
1 - 40 Gew.-% Polyether- und/oder Polyesterpolyol auf Basis von
Rizinusöl oder Sojabohnenöl mit einer OH-Zahl von 150 bis 200 mg KOH/g (**A2-1**)
1 - 30 Gew.-% Polyether- und/oder Polyesterpolyol auf Basis von Rizinusöl oder Sojabohnenöl mit einer OH-Zahl von 210 bis 300 mg KOH/g (**A2-2**).

Die Polyisocyanatkomponente **(K2)** umfasst mindestens ein Polyisocyanat (**B1**).

Als Polyisocyanat (**B1**) besonders geeignet sind einerseits Polyisocyanate (**B1**'), die neben zwei oder mehreren freien Isocyanat-Gruppen mindestens eine Harnstoff- oder eine Urethan- oder eine Biuret- oder eine Uretdiongruppe aufweisen.

Bevorzugt ist das Polyisocyanat (**B1**) ein aromatisches Polyisocyanat. Insbesondere geeignet sind Diphenylmethandiisocyanat (2,4'- und/oder 4,4'-MDI), sowie MDI-basierende Polyisocyanate. Als besonders geeignet haben sich einerseits Polyisocyanate vom Typ, wie sie kommerziell als Desmodur® VH 20 von Bayer erhältlich sind, gezeigt. Weiterhin geeignete Polyisocyanate (**B1**') sind Isocyanurate oder Biurete eines Diisocyanates, insbesondere von HDI und/oder IPDI und/oder TDI.

Es ist durchaus möglich, dass Mischungen von Polyisocyanaten **B1**' eingesetzt werden.

In einer bevorzugten Ausführungsform wird eine Mischung von einund mehrkernigem MDI (sogenanntes Polymeres MDI) eingesetzt. Als besonders bevorzugt als Polyisocyanat (**B1**) hat sich Desmodur® VKS 20 F von Bayer gezeigt.

Andererseits als Polyisocyanat (**B1**) besonders geeignet haben sich Polyurethanprepolymere (**B1**"), welche mindestens zwei Isocyanat-Gruppen aufweisen, und welche aus einer Reaktion von mindestens einem Polyisocyanat mit einem Molekulargewicht von kleiner als 300 g/mol, insbesondere von zwischen 150 g/mol und 270 g/mol, mit mindestens einem Polyol (**AB1**), gebildet werden. Als Polyol (**AB1**) sind insbesondere Polyole geeignet, welche ausgewählt sind aus der Gruppe umfassend Polyetherpolyole, Polyesterpolyole, Polycarbonatpolyole, Polyole gebildet aus ungesättigten Monomeren und deren Mischungen. Die Herstellungsweise derartiger Isocyanat-Gruppen aufweisender Polyurethanprepolymer erfolgt in bekannter Art und Weise und erfolgt typischerweise im stöchiometrischen Überschuss des Polyisocyanates gegenüber dem Polyol. Hierfür eingesetzte Polyisocyanate sind insbesondere 2,4- und 2,6-Toluylendiisocyanat (TDI), 2,4'- und 4,4'-Diphenylmethandiisocyanat (MDI), 1,6-Hexamethylendiisocyanat (HDI) sowie deren Isomerengemische und Mischungen untereinander. Als besonders bevorzugt gilt MDI.

Als Polyetherpolyole, auch Polyoxyalkylenpolyole genannt, gelten Polymerisationsprodukte von Ethylenoxid, 1,2-Propylenoxid, 1,2- oder 2,3-Butylenoxid, Tetrahydrofuran oder Mischungen davon, gegebenenfalls sind sie polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 meq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das zahlenmittlere Molekulargewicht Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole gelten insbesondere Polyole, welche beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, hergestellt werden sowie Polyesterpolyole aus Lactonen, wie beispielsweise ε-Caprolacton.

Als Polycarbonatpolyole sind insbesondere solche bevorzugt, welche durch Umsetzung der oben genannten - zum Aufbau der Polyesterpolyole eingesetzten - Alkohole mit Dialkylcarbonaten, Diarylcarbonaten oder Phosgen zugänglich sind.

Als "Polyole gebildet aus ungesättigten Monomeren" sind insbesondere derartige Polyole zu verstehen, welche aus der Polymerisation von mindestens einem der Monomere ausgewählt aus der Gruppe umfassend Ethylen, Propylen, Butylen, Butadien, Isopren, Styrol, Vinylalkohol, Vinylether, Vinylester, Acrylonitril, Säuren, Amide und Ester der Acrylsäure, Methacrylsäure, Maleinsäure, Fumarsäure, Crotonsäure und Itaconsäure sowie deren Mischungen hergestellt sind.

Als besonders geeignete Polyole gebildet aus ungesättigten Monomeren gelten hydroxyfunktionelle Polybutadiene wie Polybutadienpolyole und hydrierte Polybutadienpolyole, sowie Poly(meth)acrylatpolyole. Unter "(Meth)-acrylat" werden hier und im Folgenden des vorliegenden Dokuments stets Ester sowohl der Acrylsäure als auch der Methacrylsäure verstanden. Ebenso bezeichnet "(Meth)acrylsäure" sowohl Acrylsäure als auch Methacrylsäure.

Als "Poly(meth)acrylatpolyole" werden hierbei Polymere verstanden, welche Copolymere eines hydroxy-funktionellen (Meth)acrylsäureesters und mindestens eines weiteren Monomers, welches ausgewählt ist aus der Gruppe umfassend die Monomere Acrylsäure, Methacrylsäure, C₁-C₁₈-Alkylester der Acrylsäure oder Methacrylsäure, Styrol, Vinylester und Vinylalkohol. Als hydroxy-funktioneller (Meth)acrylsäureester werden bevorzugt Hydroxyethyl-(meth)acrylat, Hydroxypropyl(meth)acrylat und Hydroxybutyl(meth)acrylat.

Diese genannten Polyole (**AB1**) weisen bevorzugt ein mittleres Molekulargewicht von 250 bis 30'000 g/mol, insbesondere von 1'000 bis 8'000 g/mol, und sind bevorzugt Diole oder Triole, insbesondere mit einer mittleren OH-Funktionalität im Bereich von 1.6 bis 3.

In einer bevorzugten Ausführungsform wird eine Mischung von Polyolen (**AB1**) eingesetzt, die eine Mischung von Diolen und Triolen ist.

In einer Ausführungsform der Erfindung umfasst die Polyisocyanatkomponente **(K2)** mindestens ein Polyisocyanat (**B1**') und mindestens ein Polyisocyanat-Polyurethanprepolymer (**B1**").

Die Polyolkomponente **(K1)** und / oder die Polyisocyanatkomponente **(K2)** können neben den bereits erwähnten weitere Bestandteile, wie sie der Fachmann aus der Zweikomponenten-Polyurethanchemie her kennt, aufwiesen. Diese können in nur einer Komponente oder in beiden vorhanden sein. Als derartig zusätzliche Bestandteile werden beispielsweise Lösungsmittel, Weichmacher und/oder Extender Füllstoffe, wie Russe, Kreiden oder Talke, Haftvermittler, insbesondere Trialkoxysilane, sowie Thixotropiermittel, wie amorphe Kieselsäuren, und Trockenmittel, wie Zeolithe, eingesetzt.

Wie der Fachmann für Polyurethanklebstoffe weiss, muss bei der Herstellung der Komponenten, insbesondere bei der Polyisocyanatkomponente **(K2),** darauf geachtet werden, dass die Rohstoffe möglichst frei von Wasser sind und dass während und nach deren Herstellung möglichst keine Feuchtigkeit in Kontakt mit der Komponente treten kann. Dies wird einerseits durch ein physikalisches oder chemisches Trocknen der Ausgangssubstanzen sowie durch das Arbeiten unter Inertgas, üblicherweise Stickstoff, oder durch Arbeiten unter Vakuum erreicht.

Die Komponenten **(K1, K2)** werden vorteilhaft derart formuliert, dass das Volumenverhältnis von Polyolkomponente **(K1)** und Polyisocyanatkomponente **(K2)** zwischen 1:3 und 3:1, insbesondere zwischen 1:2 und 2:1, beträgt. Besonders bevorzugt beträgt dieses Verhältnis in etwa 1:1. Das Mischverhältnis ist vorzugsweise derart, dass die NCO-Gruppen der Polyisocyanatkomponente **(K2)** stöchiometrisch zu den NCO-reaktiven Gruppen, typischerweise OH-Gruppen, der Polyolkomponente **(K1)** erfolgt. Erfolgt die Mischung nicht im Wesentlichen stöchiometrisch, d.h. mit Abweichungen von mehr als 5%, erfolgt die Reaktion der Polyolkomponente **(K1)** und der Polyisocyanatkomponente **(K2)** nicht optimal, was zu einer Reduktion in den mechanischen Eigenschaften der ausgehärteten Polyurethanzusammensetzung führt. Dies trifft vor allem für einen Überschuss der Polyolkomponente zu. Beim Vorliegen eines Überschusses an Polyisocyanat ist dies zwar grundsätzlich ebenfalls nachteilig, aber durch die nachträgliche Reaktion der nicht umgesetzten Isocyanat-Gruppen mit Feuchtigkeit, beispielsweise von der Luftfeuchtigkeit herrührend, welche gegebenenfalls zu weiteren Vernetzungen führen kann, können Defekte in der Polyurethannetzwerkstruktur und daraus resultierende verschlechterte mechanische Eigenschaften zumindest teilweise kompensiert werden.

Die Polyolkomponente **(K1)** und Polyisocyanatkomponente **(K2)** werden vor der Anwendung getrennt von einander gelagert und erst bei oder unmittelbar vor der Anwendung miteinander gemischt. Die Komponenten sind vorteilhaft in einer Verpackung, welche aus zwei von einander getrennten Kammern besteht, vorhanden und zwar derart, dass die Polyolkomponente **(K1)** in der einen Kammer und die Polyisocyanatkomponente **(K2)** in der anderen Kammer vorhanden sind. Die Polyolkomponente **(K1)** und Polyisocyanatkomponente **(K2)** werden in die Kammern der Verpackung eingefüllt und luft- und feuchtigkeitsdicht verschlossen.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammernöffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für grössere Anwendungen, insbesondere für Anwendungen in der industriellen Fertigung, werden die Polyolkomponente **(K1)** und Polyisocyanatkomponente **(K2)** vorteilhaft in Fässer oder Hobbocks abgefüllt und gelagert. In diesem Falle werden die Komponenten über hydraulische Pressen, insbesondere über Folgeplatten, ausgepresst und über Leitungen einer Mischapparatur, wie sie üblich für Zwei- Komponentenklebstoffe in der industriellen Fertigung üblich eingesetzt werden, zugeführt.

Bei jeglicher Packung ist es wichtig, dass zumindest die Polyisocyanatkomponente **(K2)** luft- und feuchtigkeitsdicht verschlossen ist, so dass beide Komponenten über lange Zeit, d.h. typischerweise länger als 6 Monate, lagerfähig sind.

Die zweikomponentige Polyurethanzusammensetzung ist vorzugsweise fliessfähig, kann dabei aber insbesondere auch thixotrope Eigenschaften zeigen. Die ausgehärtete zweikomponentige Polyurethanzusammensetzung weist hohe mechanische Festigkeit auf, insbesondere hohe Werte für die Zugfestigkeit (im vorliegenden Dokumenten wird stets der Wert der Spannung am Bruchpunkt verwendet), unmittelbar nach dem Fügen gemessen nach ISO 527-2 weist diese Werte von mehr als 12 MPa, bevorzugt von mehr als 15 MPa, sowie meist bevorzugt von mehr als 20 MPa, auf. Typischerweise ist diese Zugfestigkeit jedoch kleiner als 40 MPa. Weiterhin weist die ausgehärtete zweikomponentige Polyurethanzusammensetzung eine Bruchdehnung gemessen nach ISO 527-2 von insbesondere zwischen 5 und 15 %, bevorzugt zwischen 8 und 12 %, auf.

Somit verfügt die ausgehärtete zweikomponentige Polyurethanzusammensetzung über sehr hohe mechanische Festigkeit, welche es erlaubt, die zweikomponentige Polyurethanzusammensetzung als Klebstoff für strukturelle Verklebungen und zum Verfüllen von Fugen und Spalten bei strukturellen Verklebungen, insbesondere von Rotorblättern für Windkraftanlagen, einzusetzen.

In einem weiteren Aspekt betrifft die Erfindung ein Verfahren zu einem kraftschlüssigen Verfüllen von Fugen und Spalten in einem Substrat umfassend die Schritte:
a) Mischen der Polyolkomponente **(K1)** und der Polyisocyanatkomponente **(K2)** einer zweikomponentigen Polyurethanzusammensetzung, wie sie vorgängig im Detail beschrieben wurde,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

Diese Schritte laufen in der angegebenen Reihenfolge ab.

Das Mischen erfolgt typischerweise über Statikmischer oder mit Hilfe von dynamischen Mischern. Beim Mischen ist darauf zu achten, dass die zwei Komponenten möglichst homogen gemischt werden. Werden die zwei Komponenten unvollständig gemischt, treten lokale Abweichungen von dem optimalen Mischungsverhältnis, d.h. im Wesentlichen der optimalen Stöchiometrie, auf, was sich in einer Verschlechterung der mechanischen Eigenschaften der ausgehärteten Polyurethanzusammensetzung auswirkt. Um die Mischqualität auch visuell zu beurteilen, ist es von Vorteil, wenn die Polyolkomponente **(K1)** und der Polyisocyanatkomponente **(K2)** zwei verschiedene Farben aufweisen, die untereinander, aber auch von der Mischung, visuell gut voneinander unterschieden werden können. Ein Beispiel für eine derartige Farbkombination liegt vor, wenn die eine Komponente schwarz und die andere weiss ist. Eine gute Mischung liegt, dann vor, wenn eine homogene graue Farbe vorliegt und keinerlei Streifen oder Muster in hell- oder dunkelgrau oder weiss oder schwarz vorliegen.

Die gemischte Polyurethanzusammensetzung wird in eine Fuge hinein appliziert. Derartige Fugen ergeben sich beim Verkleben von grossflächigen Formteilen zwangsläufig. Unter anderem ein Grund hierfür sind die Masstoleranzen von grossen Substraten. Die Polyurethanzusammensetzung muss in der Lage sein, die Fuge weit möglichst aufzufüllen und verbindet die Teile kraftschlüssig miteinander. Das gleiche gilt für das Auffüllen von Spalten, die nach längerem Einsatz eines strukturell verklebten Rotorblatts im Bauteil selbst oder im Bereich der Klebefugen aufgrund der Entstehung von Spannungsrissen als Spalten an der Oberfläche sichtbar sind.

Die Zusammensetzung kann mittels Düse in die Fuge oder den Spalt eingepresst werden oder mittels eines Spatels eingespachtelt werden. Demzufolge ist es von Vorteil, wenn der Klebstoff eine gewisse Formkonsistenz aufweist. Er sollte hierbei nicht zu dünnflüssig aber auch nicht zu hochviskos sein. Es hat sich als optimal herausgestellt, dass die gemischte Polyurethanzusammensetzung eine pastöse Konsistenz, ähnlich wie Fensterkitt, aufweist, standfest und vorteilhaft scherverdünnend, d.h. manuell verstreichbar, ist. Um nicht allzu viel gemischte Polyurethanzusammensetzung verwenden zu müssen bzw. zu viel aufgetragene Polyurethanzusammensetzung nachträglich wieder entfernen zu müssen, können die Ränder der Fuge oder des Spalts vorteilhaft mit einem Abdeckband oder einer temporär haftenden Folie abgedeckt werden.

Das die zu überbrückende Lücke bildende Substrat ist vorzugsweise ein Metall, ein Kunststoff, ein Glas oder eine Keramik oder ein Faserverbundwerkstoff. Es kann sein, dass zwei unterschiedliche Substrate vorhanden sind, welche miteinander verklebt sind. Es ist möglich, dass der Fügepartner, d.h. das zweite Substrat, identisch oder unterschiedlich vom ersten Substrat ist.

Das Verfüllen erfolgt typischerweise, nachdem der Klebstoff, der zum Fügen der zwei Substrate verwendet wurde, bereits ausgehärtet ist.

Nach dem Aushärten der für das Verfüllen verwendeten Polyurethanzusammensetzung kann das Verbundstück, dessen Fugen- oder Spalten verfüllt sind, noch mechanisch nachbearbeitet werden. Dies umfasst insbesondere Abschmirgeln und Abschleifen. Die Nachbearbeitung gewährleistet, dass die endgültige Form, insbesondere die optimale Raumform, erhalten wird. Das Vorliegen einer optimalen Raumform und Oberflächenbeschaffenheit ist insbesondere bei der Herstellung von Rotorblättern für Windkraftanlagen wichtig, da dies eine grossen Einfluss auf die aerodynamischen Eigenschaft und damit direkt auf den Wirkungsgrad der Rotorblätter hat, so dass sich das Vorliegen einer optimalen Raumform und Oberflächenbeschaffenheit direkt auf die Menge der aus dem Wind gewonnenen mechanischen und mittelbar auch elektrischen Energie auswirkt. Somit ist dies ein wichtiger okönomischer und auch ökologischer Faktor.

Das bevorzugte Substrat ist ein Kunststoff, insbesondere ein faserverstärkter Kunststoff.

Ein derartiger faserverstärkter Kunststoff ist ein Verbundwerkstoff bestehend aus Fasern, die in eine Matrix bestehend aus Kunststoff eingebettet sind.

Geeignete Fasern solcher faserverstärkter Kunststoffe sind Fasern, welche ausgewählt sind aus der Liste bestehend aus anorganischen Fasern, insbesondere Glasfasern und Keramikfasern; und organischen Fasern. Vorzugsweise handelt es sich bei den organischen Fasern um Aramidfasern, Polyesterfasern, Nylonfasern, Plexiglasfasern, Fasern aus einem Homo- oder Copolymeren von Ethylen und/oder Propylen, Naturfasern, Textilfasern und Kohlenstofffasern. Am meisten bevorzugt handelt es sich um Kohlenstofffasern.

Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden. Die Fasern werden insbesondere als Gewebe, Gelege oder Gewirke oder Matten oder Vliese oder Rovings eingesetzt. Die hierbei zwischen den Fasern vorhandenen Zwischenräume werden durch eine Kunststoffmatrix aufgefüllt. Geeignete Kunststoffmatrices sind ausgewählt aus der Liste bestehend aus Epoxidharz, ungesättigtem Polyesterharz, Vinylesterharz, Phenol-Formaldehydharz, Diallylphthalatharz, (Meth-)acrylat-harz, Polyurethan, Aminoharze, Melaminharz und Harnstoffharz. Insbesondere bevorzugt als Kunststoffmatrix ist Epoxidharz.

Ein besonders bevorzugtes zu verklebendes Substrat stellt ein Formteil auf Basis Glasfasern und/oder Kohlefasern in einer Polyester- oder Polyepoxidmatrix dar. Derartige Formteile können durch verschiedene Prozesse in bekannter Art und Weise aus einem Polyester- oder Polyepoxid sowie Glasfasern und/oder Kohlefasern hergestellt werden. Derartige Formteile sind beispielsweise im Flugzeugbau, im Bootsbau oder bei anderen mechanisch hoch belasteten Bauteilen eingesetzt. Ein besonderes Anwendungsgebiet solcher verklebter Substrate sind Rotorblätter für Windkraftanlagen. Auch die Herstellverfahren für solche Formteile sind dem Fachmann bekannt.

Solche Rotorblätter für Windkraftanlagen werden beispielsweise in Hohlformen hergestellt und ausgehärtet. Dabei ist die Form häufig als halbseitige Form ausgeführt. Die der Form zugewandte Seite wird im Allgemeinen in einer glatten, einsatzbereit ausgeführten Oberfläche erhalten, die andere Seite kann und soll üblicherweise noch bearbeitet werden. Dabei werden in der weiteren Herstellung der Flügel zwei oder mehr dieser Substrate miteinander verklebt. Zusätzlich werden die Flügel durch das Einbringen einer Tragwerkstruktur mechanisch verstärkt. Der Klebstoff gewährleistet dabei die Verbindung der Halbschalenprofile und der Tragwerkstruktur. Als zu verklebende Seite wird im Allgemeinen die der Form abgewandte Seite eingesetzt. Die Oberfläche soll vorzugsweise so ausgebildet sein, dass die zu verklebenden Substratteile angenähert eine Passform aufweisen. Die zum Verkleben vorgesehene Oberfläche kann rau und in sich uneben sein. Ein Schleifen oder Fräsen auf eine exakte spiegelbildliche Form zu dem zu verklebenden Gegenstück ist nicht notwendig. Eine staub- und fettfreie Oberfläche ist zum Auftragen des Klebstoffs ausreichend, der Einsatz von Primern ist nicht erforderlich.

Eine bekannte Arbeitsweise ist derart, dass die Oberflächen an der äusseren Seite der Formteile nach dem Herstellen der Teile in der Form zur Vernetzung mit einem reissfesten Schutzgewebe abgedeckt werden. Dieses kann unmittelbar vor der späteren Verklebung vollständig abgezogen werden und so eine geeignete Oberfläche ergeben. Es ist aber auch möglich, solche Oberflächen mechanisch grob zu bearbeiten und an das entsprechende Gegenstück anzupassen. Auf die so vorbereiteten und von losen Teilen und Staub befreiten Oberflächen der Substrate kann dann der Klebstoff aufgetragen werden. Die verbleibenden Fugen zwischen den durch Verkleben gefügten Formteilen oder Spalten werden dann mit der zweikomponentigen Polyurethanzusammensetzung, wie vorgängig beschrieben, verfüllt.

Die zweikomponentige Polyurethanzusammensetzung kann jedoch aufgrund ihrer mechanischen Eigenschaften auch durchaus als Klebstoff verwendet werden.

Deshalb stellt ein Verfahren zum Verkleben ebenfalls einen Aspekt der vorliegenden Erfindung dar. Dieses Verfahren umfasst die Schritte:
a') Mischen der Polyolkomponente **(K1)** und der Polyisocyanatkomponente **(K2)** einer zweikomponentigen Polyurethanzusammensetzung, wie sie vorgängig im Detail erwähnt worden ist
b') Applizieren der gemischten Polyurethanzusammensetzung auf mindestens eine der zu verklebenden Substratoberfläche,
c') Fügen innerhalb der Offenzeit
d') Aushärten der Polyurethanzusammensetzung.

Die beschriebene zweikomponentige Polyurethanzusammensetzung weist eine Offenzeit auf, welche besonders gut geeignet ist für das Verkleben von grossen Fügenteilen bzw. Formteilen oder von Verfüllen von Fugen oder Spalten von grossen Fügenteilen bzw. Formteilen. Die Offenzeit beschriebt denjenigen Zeitraum, innerhalb dessen nach dem Mischen der zwei Komponenten und anschliessender Applikation der Klebstoffes das Fügen der Substratteile noch möglich ist, bevor der Klebstoff soweit abreagiert hat, dass er nicht mehr zum Aufbau eines Klebeverbunds befähigt ist.

Es lassen sich mit den erfindungsgemässen ausgehärteten Zusammensetzungen Glasübergangstemperaturen, gemessen nach ISO 11357, von mehr als 50 °C, insbesondere von mehr als 55 °C, erhalten.

Typischerweise verfügt die zweikomponentige Polyurethanzusammensetzung bei Raumtemperatur und 50% rel. Luftfeuchtigkeit über eine Offenzeit von mehr als 60 Minuten, insbesondere von zwischen 60 Minuten und 4 Stunden.

Es ist ein besonders grosser Vorteil der vorliegenden Erfindung, dass die Offenzeit selbst bei grosser Luftfeuchtigkeitfeuchtigkeit, beispielsweise 70% relativer Luftfeuchtigkeit, noch von langer Dauer ist, d.h. mindestens 60 Minuten beträgt. Dies ist aufgrund der bekannten Reaktivität von Isocyanaten gegenüber Wasser insbesondere aus der Luftfeuchtigkeit für den Fachmann doch sehr überraschend.

Diese Eigenschaft erlaubt es, grossflächige Verklebungen oder Verfüllungen von Fugen oder Spalten von grossen Formteilen, wie sie beispielsweise in Fabrikhallen beim Bau von Rotorblättern für Windkraftanlagen oder bei der Reparatur von Spalten vor Ort vorkommen, weitgehend unabhängig von der Luftfeuchtigkeit verlässlich zu realisieren. Es ist hierbei selbstverständlich wichtig, dass durch die hohe Luftfeuchtigkeit bedingt, die mechanischen Eigenschaften nicht allzu stark negativ beeinträchtigt werden.

Aus dem vorgängig beschriebenen Verfahren resultiert ein Artikel, welcher insbesondere ein Rotorblatt für Windkraftanlagen darstellt.

Die vorgängig beschriebene zweikomponentige Polyurethanzusammensetzung lässt sich somit besonderes gut als Klebstoff, insbesondere als struktureller Klebstoff, verwenden, insbesondere als kraftübertragendes Strukturelement beim Bau von Rotorblättern für Windkraftanlagen. Typische Bespiele für Anwendungen derartiger Klebstoffe finden sich in Bauwerken, Automobilen, Fahrzeugen oder Schiffen oder Windkraftanlagen. Hierbei ist der ausgehärtete Klebstoff ein Teil einer tragenden Struktur und bildet somit ein wichtiges Bindeglied, an dessen mechanischen Eigenschaften hohe Ansprüche gestellt werden. Die vorliegende Erfindung erfüllt diese hohen Ansprüche bestens.

Die vorgängig beschriebene zweikomponentige Polyurethanzusammensetzung eignet sich insbesondere gut zur Verwendung als Verfüllmittel für Fugen oder Spalten, insbesondere als kraftschliessendes Füllmaterial beim Bau oder der Reparatur von Rotorblättern für Windkraftanlagen.

### Beispiele

Die folgenden Beispiele sollen die vorliegende Erfindung illustrieren: Die Beispiele sollen jedoch nicht als die Erfindung limitierend betrachtet werden.

Die in Tabelle 1 beispielhaft angeführten Zusammensetzungen ***1*** und ***Ref.* 1** bis ***Ref.* 4** als Referenzbeispiele weisen alle dieselbe Komponente **K2** auf.

Zur Herstellung der Komponenten **K1** wurde die Polyolmischung in einem Vakuumdissolver vorgelegt und nach Zugabe von Katalysator und Trocknungsmittel unter Ausschluss von Feuchtigkeit während 20 Minuten bei 25°C gerührt. Anschliessend wurden diese Polypolkomponenten **K1** in luft- und feuchtigkeitsdichte Kartuschen abgefüllt.

Bei Komponente **K2** wurde die Polyisocyanatkomponente **B1** in eine luft- und feuchtigkeitsdichte Kartusche abgefüllt.

Die Komponenten **K1** und **K2** wurden im Gewichtsverhältnis von **K1 : K2** wie in Tabelle 1 angegeben mittels Statikmischer vermischt (entsprechend einem NCO / OH-Verhältnis von 1.1).

### Messungen

### E-modul, Zugfestigkeit und Bruchdehnung

Die gemischten Komponenten **K1** und **K2** wurden gemischt, und unmittelbar nach der Mischung wurden daraufhin Hanteln gemäss ISO 527, Teil 2, 1 B (ISO 527-2) hergestellt, diese während 24 h bei 25 °C und anschliessend während 72 h bei 60 °C gehärtet. Nach einer Konditionierungszeit von 24h bei 25 °C wurden Zugfestigkeit , E-modul und Bruchdehnung der so hergestellten Probekörpern gemäss ISO 527-2 auf einer Zwick Z020 Zugprüfmaschine bei einer Prüftemperatur von 20°C und einer Prüfgeschwindigkeit 2 mm/min gemessen.

### Zugscherfestigkeit

Die gemischten Komponenten **K1** und **K2** wurden gemischt und auf das erste Plättchen von Glasfaserverstärktem Epoxidharz (GRE) appliziert. Anschliessend wurde sofort bzw. nach 40 bzw. 60 Minuten nach Exposition (*tₑₓₚ*) bei 25 °C und 70% relativer Luftfeuchtigkeit weiter mit der Herstellung des Zugscherfestigkeitsprüfkörper (Kontaktieren mit zweitem Glasfaserverstärktem Epoxidharz-Plättchen, Verpressen, Klebstoffdicke 2 mm) fortgefahren. Der Klebstoff wurde dann während 24 h bei 25°C und anschliessend während 72 h bei 60°C gehärtet und die Zugscherfestigkeit nach ISO 527 nach einer Konditionierungszeit von 24h bei 25°C bestimmt.

**Tabelle 1. Zusammensetzungen und Messresultate.**

| **Beispiele** | | ***1*** | ***Ref.1*** | ***Ref.2*** | ***Ref.3*** | ***Ref.4*** |
|---|---|---|---|---|---|---|
| Komponente **K1** | | ***A1*** (GT³) | ***Ref.A1*** (GT³) | ***RefA2*** (GT³) | ***Ref.A3*** (GT³) | ***Ref.A4*** (GT³) |
| Rizinusöl | **A0** | 16 | 16 | 16 | 16 | |
| Polyetherpolyol basierend auf Sorbitol mit 6 Hydroxylgruppen (Hydroxylzahl 490 mg KOH/g) | **A1** | 8 | 8 | | 8 | 8 |
| Sovermol® 805 | **A2-1** | 31.3 | 31.3 | 31.3 | | 31.3 |
| Polyol² | **A2-2'** | 13 | | 13 | 13 | 13 |
| Zeolith (Trocknungsmittel) | | 6 | 6 | 6 | 6 | 6 |
| Kreide | | 22 | 22 | 22 | 22 | 22 |
| Pyrogene Kieselsäure | | 1.5 | 1.5 | 1.5 | 1.5 | 1.5 |
| 4,4'-Methylenebis(2,6-diethylanilin) | **PA** | 2.2 | 2.2 | 2.2 | 2.2 | 2.2 |
| | | 100 | 87 | 92 | 68.7 | 84 |
| | | | | | | |

| Komponente **K2** | | (GT³) | (GT³) | (GT³) | (GT³) | (GT³) |
|---|---|---|---|---|---|---|
| Desmodur® VKS20F | **B1** | 100 | 100 | 100 | 100 | 100 |
| Mischungsverhältnis **K1/K2** [Gew./Gew.] | | 100/40 | 100/36,4 | 100/32,1 | 100/37,3 | 100/39,5 |
| | | | | | | |
| Zugfestigkeit [MPa] | | 21,5 | 28,2 | 12.2 | 25,6 | 30,8 |
| Bruchdehnung [%] | | 12.6 | 9.6 | 49.8 | 3,4 | 4,3 |
| E-Modul [MPa] | | 764 | 1321 | 50 | 1069 | 1242 |
| *Tₑₓₚ*: 0 Min. (25°C, 70% rel. LF¹) | | | | | | |
| Zugscherfestigkeit [MPa] | | 18,1 | 12.8 | 13,2 | 14,8 | 15,5 |
| *Tₑₓₚ*: 40 Min. (25°C, 70% rel. LF¹) | | | | | | |
| Zugscherfestigkeit [MPa] | | 15,2 | 7.8 | 12,3 | 7,6 | 6,5 |
| *Tₑₓₚ:* 60 Min. (25°C, 70% rel. LF¹) | | | | | | |
| Zugscherfestigkeit [MPa] | | 12.0 | 1.2 | 11,9 | 0,6 | 1,3 |

| | | | | | | |
|---|---|---|---|---|---|---|
| ¹rel. LF= relative Luftfeuchtigkeit ² Polyester/Polyether basierend auf Rizinusöl mit OH-Zahl von 220-260 mg KOH/g, Funktionalität: 2.8 ³ GT= Gewichtsteile | | | | | | |

Der Vergleich von Beispiel ***1*** und ***Ref.* 2** zeigt, dass die Abwesenheit vom Polyol mit 5 bis 8 Hydroxylgruppen zu einer ungebührend starken Reduktion der Zugfestigkeit und einem signifikaten Anstieg der Bruchdehnung führt. Zudem verschlechtert sich die Zugscherfestigkeit ebenfalls überraschenderweise erheblich.

Der Vergleich von Beispiel ***1*** und ***Ref. 1*** zeigt die Wichtigkeit der gleichzeitig vorhandenen Polyether- und/oder Polyesterpolyol auf Basis von Rizinusöl oder Sojabohnenöl (**A2-1**) und (**A2-2**) auf. Bei Abwesenheit des Polyether- und/oder Polyesterpolyol auf Basis von Rizinusöl mit hoher OH-Zahl verschlechtert sich die Zugscherfestigkeit nach längeren Offenzeiten, insbesondere nach 60 Minuten, an feuchter Luft unerwartet drastisch.

Auch bei ***Ref. 3*** und ***Ref. 4*** verschlechtert sich die Zugscherfestigkeit nach längeren Offenzeiten, insbesondere nach 60 Minuten, an feuchter Luft unerwartet drastisch.

Beispiel ***1*** zeigt, dass mit der erfindungsgemässen Zusammensetzung einerseits ein ausgewogenes Gleichgewicht zwischen für Verfüllmittel notwendiger Bruchdehnung und Zugfestigkeit erreicht werden und andererseits, dass auch nach längerer Exposition der applizierten Polyurethanzusammensetzung an feuchter Luft ein verlässlicher Aufbau von Adhäsion und damit kraftschliessender Formschluss in der Grenzschicht zwischen Verfüllmittel und Substrat erreicht werden kann.

## Patentansprüche

1. Zweikomponentige Polyurethanzusammensetzung bestehend aus einer Polyolkomponente **(K1)** und einer Polyisocyanatkomponente **(K2);** wobei die Polyolkomponente **K1**
Rizinusöl (**A0**);
mindestens ein Polyol mit 5 bis 8 Hydroxylgruppen (**A1**); mindestens ein Polyether- und/oder Polyesterpolyol auf Basis von Rizinusöl oder Sojabohnenöl mit einer OH-Zahl von 150 bis 200 mg KOH/g (**A2-1**)
sowie mindestens ein Polyether- und/oder Polyesterpolyol auf Basis von Rizinusöl oder Sojabohnenöl mit einer OH-Zahl von 210 bis 300 mg KOH/g (**A2-2**)
umfasst,
und wobei die Polyisocyanatkomponente (**K2**)
mindestens ein Polyisocyanat (**B1)**
umfasst.

2. Zweikomponentige Polyurethanzusammensetzung gemäss einem der vorhergehenden Ansprüche, **dadurch gekennzeichnet, dass** das Polyol mit 5 bis 8 Hydroxylgruppen (**A1**) ein Polyol ist, welches ausschliesslich sekundäre Hydroxylgruppen aufweist.

3. Zweikomponentige Polyurethanzusammensetzung gemäss einer der vorhergehenden Ansprüche, **dadurch gekennzeichnet, dass** das Polyol mit 5 bis 8 Hydroxylgruppen (**A1**) ein Polyetherpolyol basierend auf Sorbitol ist.

4. Zweikomponentige Polyurethanzusammensetzung gemäss einem der vorhergehenden Ansprüche, das Polyisocyanat (**B1**) ein aromatisches Polyisocyanat ist.

5. Zweikomponentige Polyurethanzusammensetzung gemäss einem der vorhergehenden Ansprüche, **dadurch gekennzeichnet, dass** die Polyolkomponente **(K1)** weiterhin ein Polyamin in einer Menge von 0.5 bis 5 Gew.-%, bevorzugt von 1.5 -bis 2.5 Gew.-%, enthält.

6. Zweikomponentige Polyurethanzusammensetzung gemäss einer der vorhergehenden Ansprüche, **dadurch gekennzeichnet, dass** die Polyolkomponente **(K1)** enthält:
10 - 25 Gew.-% Rizinusöl (**A0**);
1 - 10 Gew.-% Polyol mit 5 bis 8 Hydroxylgruppen (**A1**);
1 - 40 Gew.-% Polyether- und/oder Polyesterpolyol auf Basis von Rizinusöl oder Sojabohnenöl mit einer OH-Zahl von 150 bis 200 mg KOH/g (**A2-1**)
1 - 30 Gew.-% Polyether- und/oder Polyesterpolyol auf Basis von Rizinusöl oder Sojabohnenöl mit einer OH-Zahl von 210 bis 300 mg KOH/g (**A2-2**).

7. Verfahren zu einem kraftschlüssigen Verfüllen von Fugen und Spalten in einem Substrat umfassend die Schritte
a) Mischen der Polyolkomponente **(K1)** und der Polyisocyanatkomponente **(K2)** einer zweikomponentigen Polyurethanzusammensetzung gemäss einem der Ansprüche 1 bis 6,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

8. Verfahren zum Verkleben umfassend die Schritte
a') Mischen der Polyolkomponente **(K1)** und der Polyisocyanatkomponente **(K2)** einer zweikomponentigen Polyurethanzusammensetzung gemäss einem der Ansprüche 1 bis 6,
b') Applizieren der gemischten Polyurethanzusammensetzung auf mindestens eine der zu verklebenden Substratoberfläche,
c') Fügen innerhalb der Offenzeit
d') Aushärten der Polyurethanzusammensetzung.

9. Verfahren gemäss Anspruch 7 oder 8, **dadurch gekennzeichnet, dass** das zu verklebende Substrat ein Kunststoff, insbesondere ein faserverstärkter Kunststoff, ist.

10. Artikel, welcher nach einem Verfahren gemäss einem der Ansprüche 7 bis 9 erhalten wurde.

11. Artikel, gemäss Anspruch 10, **dadurch gekennzeichnet, dass** der Artikel ein Rotorblatt für Windkraftanlagen ist.

12. Verwendung einer zweikomponentigen Polyurethanzusammensetzung gemäss einem der Ansprüche 1 bis 6 als Klebstoff, insbesondere als struktureller Klebstoff.

13. Verwendung einer zweikomponentigen Polyurethanzusammensetzung gemäss einem der Ansprüche 1 bis 6 als kraftschlüssiges Verfüllmittel für Fugen oder Spalten.

14. Verwendung gemäss Anspruch 12 oder 13 als kraftübertragendes Strukturelement beim Bau von Rotorblättern für Windkraftanlagen.

## Claims

1. A two-component polyurethane composition consisting of a polyol component (**K1**) and a polyisocyanate component (**K2**);
wherein the polyol component **K1** comprises
castor oil (**A0**);
at least one polyol having 5-8 hydroxyl groups (**A1**);
at least one polyether and/or polyester polyol on the basis of castor oil or soybean oil having an OH number of 150 to 200 mg KOH/g (**A2-1**)
and at least one polyether and/or polyester polyol based on castor oil or soybean oil with an OH number of 210-300 mg KOH/g (**A2-2**)
and wherein the polyisocyanate component **(K2)** comprises
at least one polyisocyanate (**B1**).

2. The two-component polyurethane composition according to any one of the preceding claims, **characterized in that** the polyol having 5 to 8 hydroxyl groups (**A1**) is a polyol having exclusively secondary hydroxyl groups.

3. The two-component polyurethane composition according to any one of the preceding claims, **characterized in that** the polyol having 5-8 hydroxyl groups (**A1**) is a polyether polyol on the basis of sorbitol.

4. The two-component polyurethane composition according to any one of the preceding claims, the polyisocyanate (**B1**) being an aromatic polyisocyanate.

5. The two-component polyurethane composition according to any one of the preceding claims, **characterized in that** the polyol component (**K1**) further contains a polyamine in an amount of 0.5 to 5 wt-%, preferably from 1.5 to 2.5 wt-%.

6. The two-component polyurethane composition according to one of the preceding claims, **characterized in that** the polyol component (**K1)** comprises:
10 - 25 wt-% of castor oil (**A0**);
1 - 10 wt-% of a polyol having 5-8 hydroxyl groups (**A1**);
1-40 wt-% of a polyether and/or polyester polyol on the basis of castor oil or soybean oil having an OH number of 150 to 200 mg KOH/g (**A2-1**)
1 - 30 wt-% of polyether and/or polyester polyol on the basis of castor oil or soybean oil having an OH number of 210-300 mg KOH/g **(A2-2).**

7. A method for non-positive filling joints and gaps in a substrate, comprising the steps of
a) mixing said polyol component (**K1**) and said polyisocyanate component **(K2)** of a two-component polyurethane composition according to any one of claims 1 to 6,
b) applying said mixed polyurethane composition in the joint to be bridged between two substrates, or in the gap to be filled at the surface of a substrate,
c) curing the polyurethane composition in the joint or gap.

8. A method of gluing, comprising the steps of
a') mixing the polyol component (**K1**) and the polyisocyanate component **(K2)** of a two-component polyurethane composition according to any one of claims 1 to 6,
b') applying the mixed polyurethane composition to at least one surface of the substrates to be glued,
c') joining within the open time,
d') curing the polyurethane composition.

9. The method according to claim 7 or 8, **characterized in that** the substrate to be glued is a plastic, in particular a fiber-reinforced plastic.

10. An item, which was obtained by a method according to any one of claims 7 to 9.

11. The item according to claim 10, **characterized in that** the item is a rotor blade for wind power plants.

12. A use of a two-component polyurethane composition according to any one of claims 1 to 6 as an adhesive, particularly as a structural adhesive.

13. The use of a two-component polyurethane composition according to any one of claims 1 to 6 as a non-positive filler for joints or gaps.

14. The use according to claim 12 or 13 as a force-transmitting structural element in the construction of rotor blades for wind power plants.

## Revendications

1. Composition de polyuréthanne à deux composants, constituée d'un composant polyol (K1) et d'un composant polyisocyanate (K2) ; le composant polyol (K1) comprenant
de l'huile de ricin (A0) ;
au moins un polyol ayant 5 à 8 groupes hydroxyle (A1) ;
au moins un polyéther- et/ou polyesterpolyol à base d'huile de ricin ou d'huile de soja, ayant un indice d'OH de 150 à 200 mg KOH/g (A2-1) ;
ainsi qu'au moins un polyéther- et/ou polyesterpolyol à base d'huile de ricin ou d'huile de soja ayant un indice d'OH de 210 à 300 mg KOH/g (A2-2) ;
et le composant polyisocyanate (K2) comprenant au moins un polyisocyanate (B1).

2. Composition de polyuréthanne à deux composants selon l'une des revendications précédentes, **caractérisée en ce que** le polyol ayant 5 à 8 groupes hydroxyle (A1) est un polyol qui comprend exclusivement des groupes hydroxyle secondaires.

3. Composition de polyuréthanne à deux composants selon l'une des revendications précédentes, **caractérisée en ce que** le polyol ayant 5 à 8 groupes hydroxyle (A1) est un polyétherpolyol à base de sorbitol.

4. Composition de polyuréthanne à deux composants selon l'une des revendications précédentes, le polyisocyanate (B1) est un polyisocyanate aromatique.

5. Composition de polyuréthanne à deux composants selon l'une des revendications précédentes, **caractérisée en ce que** le composant polyol (K1) contient en outre une polyamine en une quantité de 0,5 à 5 % en poids, de préférence de 1,5 à 2,5 % en poids.

6. Composition de polyuréthanne à deux composants selon l'une des revendications précédentes, **caractérisée en ce que** le composant polyol (K1) contient :
10-25 % en poids d'huile de ricin (A0) ;
1-10 % en poids d'un polyol ayant 5 à 8 groupes hydroxyle (A1) ;
1-40 % en poids d'un polyéther- et/ou polyesterpolyol à base d'huile de ricin ou d'huile de soja, ayant un indice d'OH de 150 à 200 mg KOH/g (A2-1) ;
1-30 % en poids d'un polyéther- et/ou polyesterpolyol à base d'huile de ricin ou d'huile de soja, ayant un indice d'OH de 210 à 300 mg KOH/g (A2-2).

7. Procédé de remplissage à force de joints et d'interstices dans un substrat, comprenant les étapes :
a) mélange du composant polyol (K1) et du composant polyisocyanate (K2) d'une composition de polyuréthanne à deux composants selon l'une des revendications 1 à 6,
b) application de la composition de polyuréthanne mélangée dans le joint à recouvrir entre deux substrats, ou dans l'interstice à remplir sur la surface d'un substrat,
c) durcissement de la composition de polyuréthanne dans le joint ou dans l'interstice.

8. Procédé de collage, comprenant les étapes a') mélange du composant polyol (K1) et du composant polyisocyanate (K2) d'une composition de polyuréthanne à deux composants selon l'une des revendications 1 à 6,
b') application de la composition de polyuréthanne mélangée sur au moins l'une des surfaces de substrat à coller,
c') assemblage au cours du temps ouvert,
d') durcissement de la composition de polyuréthanne.

9. Procédé selon la revendication 7 ou 8, **caractérisé en ce que** le substrat à coller est un matériau plastique, en particulier un plastique renforcé par des fibres.

10. Article qui a été obtenu par un procédé selon l'une des revendications 7 à 9.

11. Article selon la revendication 10, **caractérisé en ce que** l'article est une pale de rotor pour éoliennes.

12. Utilisation d'une composition de polyuréthanne à deux composants selon l'une des revendications 1 à 6 en tant qu'adhésif, en particulier en tant qu'adhésif structural.

13. Utilisation d'une composition de polyuréthanne à deux composants selon l'une des revendications 1 à 6 en tant que produit de remplissage à force de joints ou interstices.

14. Utilisation selon la revendication 12 ou 13 en tant qu'élément structural transmetteur de force lors de la construction de pales de rotor pour éoliennes.
